# EUROPÄISCHE PATENTSCHRIFT

(11) **EP 1 686 247 B1**
(45) Veröffentlichungstag und Bekanntmachung des Hinweises auf die Patenterteilung: **16.01.2008**
(21) Anmeldenummer: 04029587.5
(22) Anmeldetag: 14.12.2004
(51) Int. Cl.: F01N 7/18, F02B 37/00

(54) **Turbolader-Katalysator-Anordnung**
Turbocharger-Catalyst-Arrangement
Arrangement Turbocompresseur-Calatyseur

(43) Veröffentlichungstag der Anmeldung: 02.08.2006
(73) Patentinhaber: BorgWarner Inc., Auburn Hills, MI 48326-2872 (US)
(72) Erfinder: Ellenberger, Dirk, 67677 Enkenbach-Alsenborn (DE); Kuschel, Marco, 67294 Orbis (DE)
(74) Vertreter: Schmitz, Hans-Werner

(56) Entgegenhaltungen:
- WO-A-01/42633
- DE-A1- 19 625 990
- DE-U1- 20 317 425
- GB-A- 2 016 627
- US-A- 4 559 776
- US-B1- 6 383 315
- PATENT ABSTRACTS OF JAPAN Bd. 015, Nr. 008 (M-1067), 9. Januar 1991 (1991-01-09) & JP 02 259224 A (SUZUKI MOTOR CO LTD), 22. Oktober 1990 (1990-10-22)
- PATENT ABSTRACTS OF JAPAN Bd. 2000, Nr. 14, 5. März 2001 (2001-03-05) & JP 2000 328934 A (SUZUKI MOTOR CORP), 28. November 2000 (2000-11-28)
- NEWTEX: "The High Temperature Advantage"[Online] Oktober 1998 (1998-10), XP002324861 Gefunden im Internet: URL:http://www.newtex.com/pdf/Industrial.p df> [gefunden am 2005-04-15]

## Beschreibung

Die Erfindung betrifft eine Turbolader-Katalysator-Anordnung gemäß dem Oberbegriff des Anspruches 1.

Beispiele für eine Kombination zwischen einem Turbolader und einem bzw. mehreren Katalysatoren sind der DE 699 13 149 T2 und der DE 196 25 990 A1 zu entnehmen. Ist bei einer derartigen Anordnung der Turbolader mit dem Katalysator verbunden, wird diese Verbindung über einen Katalysatorflansch und einem Turbinengehäuseflansch mit Hilfe einer geeigneten Verbindungseinrichtung bewerkstelligt. Zwischen die Flansche ist eine Dichteinrichtung zwischengeschaltet.

Bei dieser Anordnung ergeben sich jedoch Probleme im Hinblick auf einen unerwünscht hohen Schalldruckpegel im Fahrzeuginnenraum, was auf eine Schwingungsübertragung zwischen dem Katalysatorflansch und dem Turbinengehäuseflansch zurückzuführen ist.

Es ist daher Aufgabe der vorliegenden Erfindung, eine Turbolader-Katalysator-Anordnung der im Oberbegriff des Anspruches 1 angegebenen Art zu schaffen, mit der es möglich ist, den Schalldruckpegel im Fahrzeuginnenraum merklich zu reduzieren.

Die Lösung dieser Aufgabe erfolgt durch die Merkmale des Anspruchs 1.

Durch den Einsatz eines thermisch resistenten, elastischen Materials zwischen den Flanschen des Turbinengehäuses und des Katalysators und der diese fixierenden Verbindungseinrichtung ist es erfindungsgemäß möglich, die Schwingungsübertragung zwischen dem Abgas-Turbolader und dem Katalysator erheblich zu vermindern.

Im Rahmen der Erfindung durchgeführte Untersuchungen haben ergeben, dass der Schalldruckpegel im Fahrzeuginnenraum durch diese Maßnahme um mindestens 6 dB reduzierbar ist.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung der Erfindung anhand der beigefügten Zeichnung. Es zeigt:
- Fig. 1: eine schematisch vereinfachte Darstellung einer ersten Ausführungsform einer Turbolader-Katalysator-Anordnung,
- Fig. 2: eine der Fig. 1 entsprechende Darstellung einer zweiten Ausführungsform der erfindungsgemäßen Turbolader-Katalysator-Anordnung, und
- Fig. 3: eine schematisch vereinfachte Darstellung einer geteilten Isolationsschicht, bei der die Teilungs-ebene radial über den Umfang der Isolationsschicht liegt.

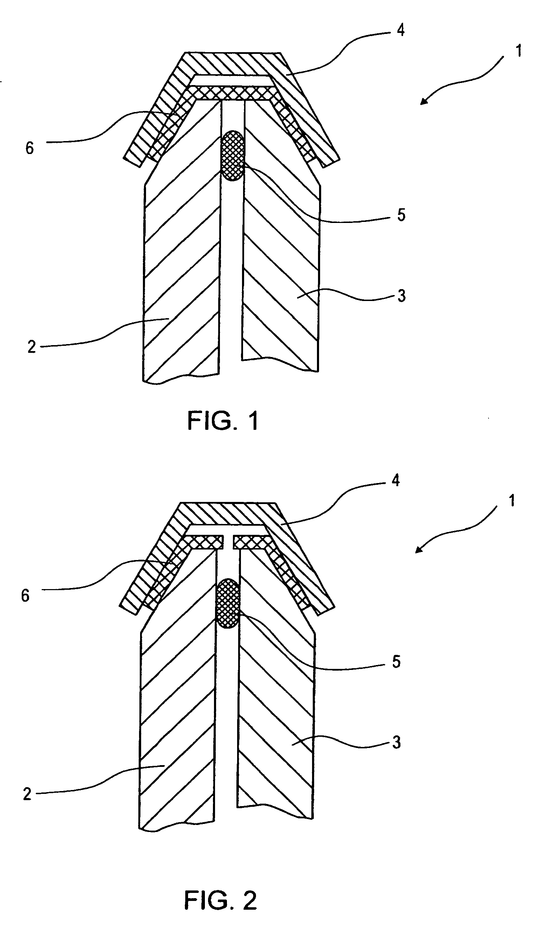

Die Figur 1 zeigt eine schematisch vereinfachte Darstellung einer Turbolader-Katalysator-Anordnung 1. Diese Anordnung 1 weist einen Turbinengehäuseflansch 2 auf, der ein Teil des in der Figur nicht näher dargestellten Turbinengehäuses des Turboladers ist. Es versteht sich, dass dieser Turbolader alle übrigen und üblichen Bestandteile wie die Turbine, das Verdichterrad, die zugeordneten Gehäuse sowie das Lagergehäuse mit der Lageranordnung zur Lagerung der Welle des Turboladers aufweist.

Der Katalysator ist in seiner Gesamtheit in der Figur ebenfalls nicht näher dargestellt, sondern wird lediglich durch einen Katalysatorflansch 3 repräsentiert. Zwischen dem Turbinengehäuseflansch 2 und dem Katalysatorflansch 3 ist eine Dichtung 5 angeordnet.

Erfindungsgemäß ist ferner eine Isolationsschicht 6 aus thermisch resistentem elastischem Material vorgesehen. Die Figur 1 verdeutlicht, dass die Isolationsschicht 6 zusammen mit der Verbindungseinrichtung 4, vorzugsweise in Form einer Schelle, eine Fixierung der beiden Flansche 2 und 3 aneinander unter Zwischenschaltung der Isolationsschicht 6 möglich macht.

Die Isolationsschicht 6 ist hierbei so angeordnet, dass sie den Abstand zwischen den Flanschen 2 und 3 überbrückt und zwischen der Verbindungseinrichtung 4 und den Flanschen 2 und 3 angeordnet ist.
Die Isolationsschicht 6 besteht beispielsweise aus einem nicht formbeständigen gewebeähnlichen Material, das zwischen die Verbindungseinrichtung 4 und den Kontaktflächen der beiden Flansche von Turbinengehäuse und Katalysator eingelegt wird.

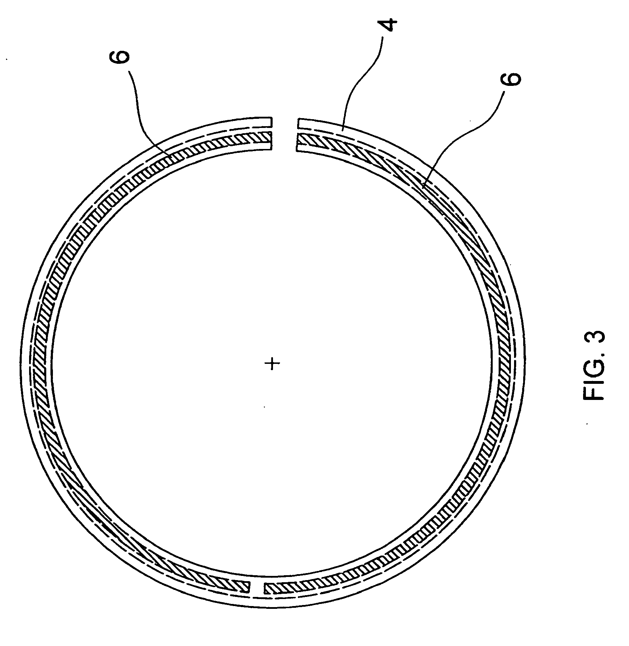

Das Material der Isolationsschicht 6 kann aber auch vorgeformt sein und zwar in der Art und Weise, dass es die äußere Form der beiden Flansche 2 und 3 möglichst genau nachbildet. Es ist sogar eine Teilung der Isolationsschicht 6 denkbar, wobei die Teilungsebene mittig, entweder axial zwischen den Flanschen 2 und 3 (Fig. 2, ) oder radial über deren Umfang liegen kann (Fig. 3).

Das Material für die Isolationsschicht 6 kann bevorzugterweise ein Hochtemperaturisolationsstoff sein, der unter der Bezeichnung "ZETEX" erhältlich ist.

Da die weiteren Teile des Katalysators für die Erläuterung der Prinzipien vorliegender Erfindung ebenfalls nicht erforderlich sind, sind diese in der Figur nicht dargestellt.

### Bezugszeichenliste

- 1: Turbolader-Katalysator-Anordnung
- 2: Turbinengehäuseflansch
- 3: Katalysatorflansch
- 4: Verbindungseinrichtung (Schelle)
- 5: Dichtung
- 6: Isolationsschicht

## Patentansprüche

1. Turbolader-Katalysator-Anordnung (1)
- mit einem Turbinengehäuse des Turboladers, das einen Turbinengehäuseflansch (2) aufweist;
- mit einem Katalysatorsflansch (3) als Teil des Katalysators; und
- mit einer Verbindungseinrichtung (4), die den Turbinengehäuseflansch und den Katalysatorflansch (3) unter Zwischenschaltung einer Dichtung (5) aneinander fixiert, **dadurch gekennzeichnet, dass** eine Isolationsschicht (6) aus thermisch resistentem elastischem Material zwischen der Verbindungseinrichtung (4) und dem Turbinengehäuseflansch (2) und dem Katalysatorflansch (3) angeordnet ist.

2. Turbolader-Katalysator-Anordnung nach Anspruch 1, **dadurch gekennzeichnet, dass** die Isolationsschicht (6) den metallischen Kontakt zwischen dem Turbinengehäuseflansch (2) und dem Katalysatorflansch (3) über die Verbindungseinrichtung (4) unterbricht.

3. Turbolader-Katalysator-Anordnung nach Anspruch 2, **dadurch gekennzeichnet, dass** die Isolationsschicht (6) eine vorgeformte Form der Flanschverbindung aufweist.

4. Turbolader-Katalysator-Anordnung nach einem der Ansprüche 1 bis 3, **dadurch gekennzeichnet, dass** das Material der Isolationsschicht (6) ein Hochtemperatur-Isolationsstoff ist.

5. Turbolader-Katalysator-Anordnung nach einem der Ansprüche 1 bis 4, **dadurch gekennzeichnet, dass** die Verbindungseinrichtung (4) als Schelle ausgebildet ist.

6. Turbolader-Katalysator-Anordnung nach einem der Ansprüche 1 bis 5, **dadurch gekennzeichnet, dass** die Isolationsschicht in zwei Teile teilbar ist.

## Claims

1. A turbocharger/catalytic converter assembly (1) comprising:
- a turbine casing of the turbocharger which includes a turbine casing flange (2);
- a catalyst flange (3) as part of the catalytic converter; and
- a connecting means (4) which fixes the turbine casing flange and the catalyst flange (3) to each other with interposition of a seal (5), **characterized in that** an insulation layer (6) of a thermally resistant elastic material is arranged between the connecting means (4) and the turbine casing flange (2) and the catalyst flange (3).

2. The turbocharger/catalytic converter assembly according to claim 1, **characterized in that** the insulation layer (6) interrupts the metallic contact between the turbine casing flange (2) and the catalyst flange (3) through the connecting means (4).

3. The turbocharger/catalytic converter assembly according to claim 2, **characterized in that** the insulation layer (6) has a pre-shaped form of the flange connection.

4. The turbocharger/catalytic converter assembly according to any one of claims 1 to 3, **characterized in that** the material of the insulation layer (6) is a high-temperature insulation material.

5. The turbocharger/catalytic converter assembly according to any one of claims 1 or 4, **characterized in that** the connecting means (4) is configured as a clamp.

6. The turbocharger/catalytic converter assembly according to any one of claims 1 to 5, **characterized in that** the insulation layer can be divided into two parts.

## Revendications

1. Système de turbocompresseur et catalyseur (1), comportant
- un carter de turbine du turbocompresseur, qui comporte une bride de cylindre (2) ;
- une bride de catalyseur (3) formant une partie du catalyseur ; et
- un dispositif d'assemblage (4), par lequel la bride de cylindre (2) et la bride de catalyseur (3) sont fixées l'une à l'autre en y intercalant une garniture d'étanchéité (5), **caractérisé en ce qu'**une couche isolante (6), réalisée dans un matériau élastique thermorésistant, est disposée entre le dispositif d'assemblage (4) et la bride de cylindre (2) et la bride de catalyseur (3).

2. Système de turbocompresseur et catalyseur selon la revendication 1, **caractérisé en ce que** la couche isolante (6) interrompt le contact métallique entre la bride de carter (2) et la bride de catalyseur (3) par l'intermédiaire du dispositif d'assemblage (4).

3. Système de turbocompresseur et catalyseur selon la revendication 2, **caractérisé en ce que** la couche isolante (6) possède une forme préformée de l'assemblage à bride.

4. Système de turbocompresseur et catalyseur selon l'une des revendications 1 à 3, **caractérisé en ce que** le matériau de la couche isolante (6) est un matériau isolant à haute température.

5. Système de turbocompresseur et catalyseur selon l'une des revendications 1 à 4, **caractérisé en ce que** le dispositif d'assemblage (4) est réalisé sous forme de collier.

6. Système de turbocompresseur et catalyseur selon l'une des revendications 1 à 5, **caractérisé en ce que** la couche isolante peut être divisée en deux parties.
